# EUROPEAN PATENT APPLICATION

(11) **EP 2 096 573 A2**
(43) Date of publication of application: **02.09.2009**
(21) Application number: 09001837.5
(22) Date of filing: 10.02.2009
(51) Int. Cl.: G06F 21/20

(54) **Authentication device, biological information management apparatus, authentication system and authentication method**

(30) Priority: 28.02.2008 JP 2008047623
(71) Applicant: Hitachi Ltd., Chiyoda-ku Tokyo 100-8280 (JP)
(72) Inventor: Osaka, Fumihiro, Chiyoda-ku Tokyo 100-8220 (JP); Nakano, Hiroyuki, Chiyoda-ku Tokyo 100-8220 (JP); Nunokami, Hiroyasu, Chiyoda-ku Tokyo 100-8220 (JP)
(74) Representative: Strehl Schübel-Hopf & Partner

(57) **Abstract**

An authentication device 40 which is used for a thin client 30 or the like encrypts address information of the biological information management apparatus 10 that is an access destination of the thin client 30 with biological information of a user of the thin client 30, and stores the encrypted address information. When the authentication device 40 receives the biological information of the user of the thin client, the authentication device 40 decrypts the encrypted address information with the received biological information, and outputs the decrypted address information to the thin client 30. When the thin client 30 accesses a biological information management apparatus 10 by using the address information and succeeds in an authentication, the thin client 30 receives profile information of a server 20 from the biological information management apparatus 10. The thin client 30 then logs in the server 20 by using the profile information.

## Description

### FIELD OF THE INVENTION

The present invention relates to a system including a terminal such as a thin client and a server to which the terminal is coupled, and more particularly to a technique for controlling an access from a terminal to a server by using a biological authentication.

### BACKGROUND OF THE INVENTION

Conventionally, there has been a technique for restricting the use of a terminal to a specified user by performing an authentication using biological information of a user, such as his or her fingerprint, iris, vein, or voice, to prevent a third party from illegally using the terminal (e.g. disclosed in Japanese Patent Publication No. 2001-67137). The technique may employ an authentication device which stores information for allowing the terminal (e.g. a thin client) to access a server, such as a user password, user authentication information for starting the thin client or for coupling to the server, an IP (Internet Protocol) address for coupling to the server remotely, and profile information. The terminal to which the authentication device is coupled accesses an access destination apparatus which is recorded in the authentication device. Such an authentication device is often used for a thin client that does not include a hard disk.

In the authentication method using the authentication device, however, a server may be illegally accessed if the authentication device is stolen and information on the server which is the access destination of a terminal is leaked.

### SUMMARY OF THE INVENTION

The present invention has been made in an attempt to provide an authentication device, a biological information management apparatus, an authentication system, an authentication method that enable to prevent an unauthorized access from a terminal to a server which is an access destination of the terminal.

A first aspect of the present invention provides an authentication device which outputs to a thin client address information of a server which is an access destination of the thin client, including: an input unit for receiving biological information of a user of the thin client; and a storage unit for storing the address information of the server which is the access destination of the thin client. The address information is encrypted with the biological information of the user. The authentication device further includes a decryption unit for decrypting the encrypted address information with the received biological information of the user when the biological information of the user is received via the input unit, and an output unit for outputting the decrypted address information to the thin client.

Other features and advantages of the present invention will become more apparent from the following detailed descriptions of the invention when taken in conjunction with the accompanying drawings.

### BRIEF DESCRIPTION OF THE DRAWINGS

Fig. 1 is an illustration showing an example system according to an embodiment of the present invention.
Fig. 2 is an illustration showing an example system according to the embodiment of the present invention.
Fig. 3 is an illustration showing an example configuration of the system according to the embodiment of the present invention.
Figs 4A and 4B exemplify flowcharts of an initial registration process of the system shown in Fig. 3 (the flowchart of Fig. 4A is followed by that of Fig. 4B).
Fig. 5 exemplifies a flowchart of the initial registration process of the system shown in Fig. 3.
Fig. 6 is an illustration showing an example registration screen displayed by a display information processing unit shown in Fig. 3.
Figs. 7A and 7B exemplify flowcharts of an authentication process of the system shown in Fig. 3 (the flowchart of Fig. 7A is followed by that of Fig. 7B).
Figs. 8A and 8B exemplify flowcharts of the authentication process of the system shown in Fig. 3 (the flowchart of Fig. 8A is followed by that of Fig. 8B).
Fig. 9 is an illustration showing an example authentication screen displayed by the display information processing unit shown in Fig. 3.

### DESCRIPTION OF SPECIFIC EMBODIMENT

### <Summary>

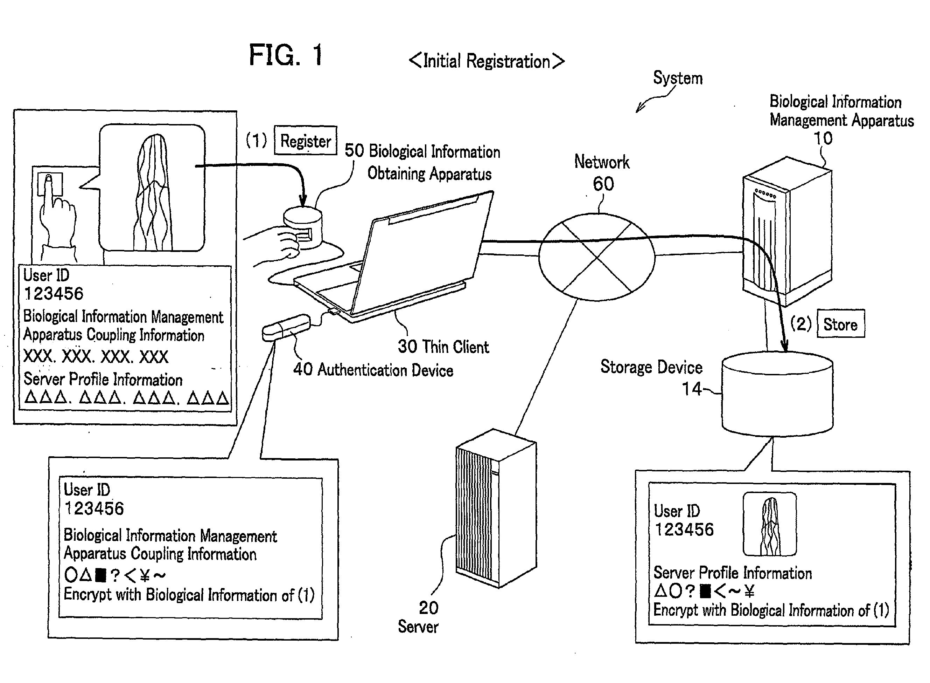

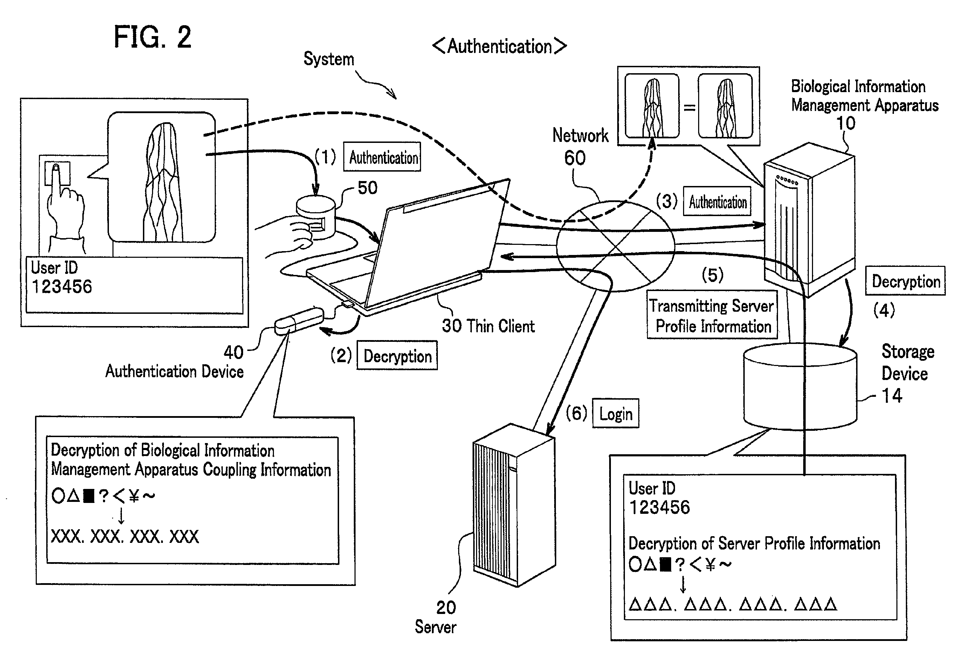

An embodiment of the present invention is described in detail below with reference to the accompanying drawings. Fig. 1 and Fig. 2 are illustrations showing an example system according to the embodiment of the present invention. In the following explanation, a terminal which accesses a server is a thin client to which an authentication device can be coupled, however, the terminal is not limited to such a thin client. To be more specific, the terminal may be a thin client that does not use an authentication device, or a general-purpose computer including a storage medium such as a hard disk. An encryption using biological information according to the embodiment is, for example, to encrypt target data by using, as a key, combination of numerals indicated by binary data of an image of biological information.

As shown in Fig. 1, a system includes a biological information management apparatus (server) 10, a storage device 14, a server 20, a thin client (terminal) 30, an authentication device 40, and a biological information obtaining apparatus 50. The thin client 30, the biological information management apparatus 10 and the server 20 are communicably coupled with one another via a network 60, such as an IP (Internet Protocol) network. The thin client 30, the biological information management apparatus 10 and the server 20 are coupled, for example, via a VPN (Virtual Private Network). The numbers of the biological information management apparatus 10, the storage device 14, the server 20, the thin client 30 and the authentication device 40 and the biological information obtaining apparatus 50 are not limited to those shown in Fig. 1.

The biological information management apparatus 10 is a server which performs an authentication by checking biological information sent from the thin client 30 with biological information stored in the storage device 14. The storage device 14 stores biological information of a user of the thin client 30 (e.g. image data of user's finger vein). Biological information to be used for the authentication in the embodiment may be user's fingerprint, iris, vein, voice or the like.

The server 20 is a server apparatus which generates screen information to be displayed on a display of the thin client 30 by using information input from the thin client 30 (input of a keyboard or a mouse), and sends the screen information to the thin client 30, which is the source of the input information, via the network 60. The thin client 30 is not equipped with a hard disk. The thin client 30 sends the input information of the keyboard or the mouse to the server 20 via the network 60, receives from the server 20 the screen information which is a process result of the input information and displays the screen information on a display. The thin client 30 may be a mobile type or desk top type.

The authentication device 40 can be coupled to or disconnected from the thin client 30 and stores information for allowing the thin client 30 to access the biological information management apparatus 10 (biological information management apparatus coupling information). The thin client 30 accesses the biological information management apparatus 10 based on the biological information management apparatus coupling information which is output from the authentication device 40. The authentication device 40 is, for example, a key mobile.

The biological information obtaining apparatus 50 is an apparatus for obtaining biological information of a user of the thin client 30 (e.g. user's finger vein). In Fig. 1, the biological information obtaining apparatus 50 is externally coupled to the thin client 30, however, the thin client 30 may be incorporated in the thin client 30.

### <Initial registration process>

Next, an initial registration process in the system of the embodiment is briefly described referring to Fig. 1.

### (1) Registration

Firstly, the thin client 30 receives user's biological information obtained by the biological information obtaining apparatus 50, a user ID input by an input device such as a keyboard, the biological information management apparatus coupling information (address information of the biological information management apparatus 10) and server profile information (address information of the server 20 which is an access destination of the thin client 30, user's setting information in the server 20 or the like). The thin client 30 stores the received information in a memory and outputs the biological information and the biological information management apparatus coupling information to the authentication device 40. When the authentication device 40 receives the biological information and the biological information management apparatus coupling information, the authentication device 40 encrypts the biological information management apparatus coupling information with the biological information, and stores the encrypted information in a memory. The thin client 30 also sends the user ID, the biological information, and the server profile information to the biological information management apparatus 10.

### (2) Storage

When the biological information management apparatus 10 receives the user ID, the biological information and the server profile information from the thin client 30, the biological information management apparatus 10 encrypts the server profile information with the received biological information. The biological information management apparatus 10 associates the encrypted server profile information with the user ID and the biological information, and stores the encrypted server profile information in the storage device 14.

As described above, the authentication device 40 stores the encrypted biological information management apparatus coupling information (address information of the biological information management apparatus 10), and the biological information management apparatus 10 stores the encrypted server profile information. After completion of the initial registration, the thin client 30 deletes the biological information management apparatus coupling information and the server profile information. Thus, even if the authentication device 40 or the thin client 30 is stolen, the biological information management apparatus coupling information or the server profile information will not be leaked. Furthermore, since the server profile information of the biological information management apparatus 10 is encrypted by the user's biological information, even if the server profile information is stolen from the biological information management apparatus 10, the contents of the information will not be leaked.

### < Authentication process>

Next, an operational flow of the authentication process performed by the system according to the embodiment is described with reference to Fig. 2.

### (1) Authentication

Firstly, the thin client 30 receives, as authentication information, biological information which is obtained by the biological information obtaining apparatus 50, and a user ID input by a keyboard or the like. The thin client 30 outputs the biological information to the authentication device 40.

### ( 2 )Decryption

The authentication device 40 decrypts the biological information management apparatus coupling information (the encrypted biological information management apparatus coupling information) with the biological information output from the thin client 30, and sends it to the thin client 30.

### (3)Authentication

The thin client 30 then uses the decrypted biological information management apparatus coupling information to access the biological information management apparatus 10 and sends the user ID and the biological information to the biological information management apparatus 10. When the biological information management apparatus 10 receives the user ID and the biological information, the biological information management apparatus 10 performs an authentication process by checking the received biological information with the biological information which is associated with the received user ID and is stored in the storage device 14. More specifically, the biological information management apparatus 10 determines whether or not the sent biological information is identical to the biological information which is associated with the received user ID and is stored in the storage device 14.

### (4)Decryption

If the authentication is succeeded, the biological information management apparatus 10 retrieves the server profile information which is associated with the received user ID (the encrypted server profile information) from the storage device 14, and decrypts the encrypted server profile information with the biological information sent from the thin client 30.

### (5)Transmission of Server Profile Information

The biological information management apparatus 10 then sends the decrypted server profile information to the thin client 30.

### (6)Login

When the thin client 30 receives the server profile information from the biological information management apparatus 10, the thin client 30 logs in the server 20 by using the server profile information.

As described above, the authentication device 40 stores the encrypted biological information management apparatus coupling information. When the authentication device 40 outputs the biological information management apparatus coupling information to the thin client 30, the authentication device 40 decrypts biological information management apparatus coupling information with biological information and then outputs the decrypted biological information management apparatus coupling information to the thin client. The biological information management apparatus 10 also stores the encrypted server profile information of the thin client 30. When the biological information management apparatus 10 sends the server profile information to the thin client 30, the biological information management apparatus 10 decrypts the encrypted server profile information with biological information, and outputs the decrypted server profile information to the thin client 30. With the configuration described above, the security of the authentication processes is improved which are performed when the thin client 30 accesses the biological information management apparatus 10 or when the thin client 30 accesses the server 20.

### «Configuration»

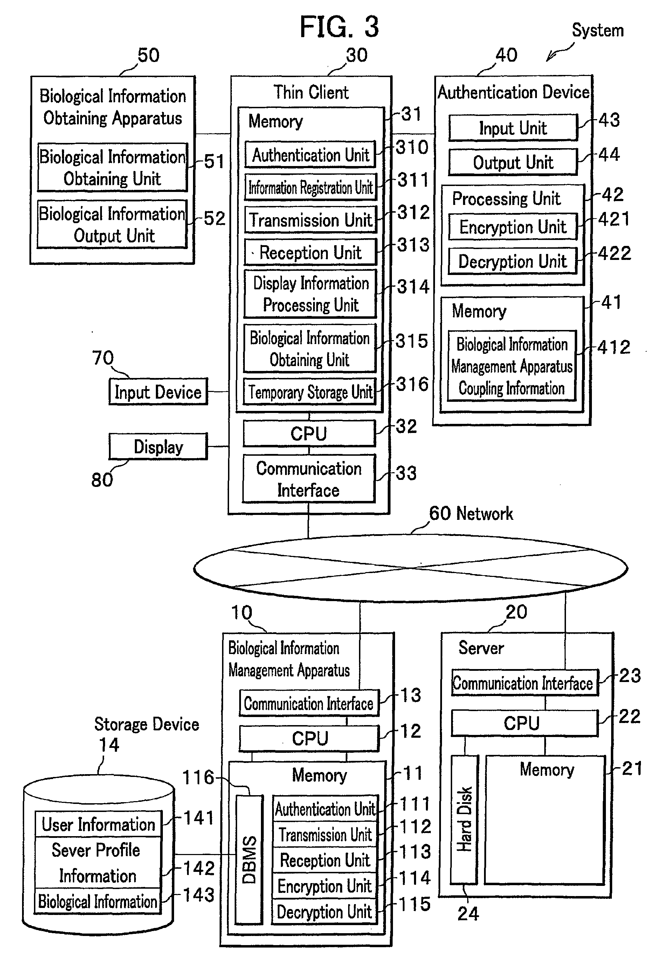

Next, a configuration of the system is described in detail referring to Fig. 3. Fig. 3 is an illustration showing an example configuration of the system according to the embodiment of the present invention. As described above, the system includes the biological information management apparatus 10, the storage device 14, the server 20, the thin client 30, the authentication device 40, the biological information obtaining apparatus 50 and the network 60.

### <Biological Information Management Apparatus>

The biological information management apparatus 10 performs the authentication process based on biological information sent from the thin client 30. The biological information management apparatus 10 decrypts server profile information stored in the storage device 14 with the biological information, and sends the decrypted server profile information to the thin client 30. The biological information management apparatus 10 is realized by a computer including a memory 11, a CPU (Central Processing Unit) 12 and a communication interface 13. The memory 11 is realized, for example, by a RAM (Random Access Memory) or the like, and is used when the CPU 12 performs arithmetic processing. The communication interface 13 is realized, for example, by a NIC (Network Interface Card) or the like, and functions as a communication interface of the network 60.

The memory 11 includes an authentication unit 111, a transmission unit 112, a reception unit 113, an encryption unit 114, a decryption unit 115 and a DBMS (DataBase Management System) 116. In Fig. 3, the authentication unit 111, the transmission unit 112, the reception unit 113, the encryption unit 114, the decryption unit 115 and the DBMS 116 of the memory 11 are programs functioning as these units which are loaded so that the CPU 12 can execute the programs.

The authentication unit 111 performs the authentication process by using biological information which is input via the communication interface 13. For example, when a user ID and biological information are input to the authentication unit 111, the authentication unit 111 retrieves the biological information (biological information 143) which is associated with the user ID from the storage device 14. The authentication unit 111 then determines whether or not the biological information 143 is identical to the input biological information.

The transmission unit 112 sends to the thin client 30 server profile information decrypted by a decryption unit 115 (described later) via the communication interface 13.

The reception unit 113 outputs to the DBMS116 a user ID, server profile information and biological information sent from the thin client 30. The thin client 30 is allowed to use an area in the server 20 which is allocated to the thin client 30 by using the server profile information.

The encryption unit 114 encrypts server profile information received from the thin client 30 with biological information. The encryption unit 114 then outputs the encrypted server profile information to the DBMS116.

The decryption unit 115 decrypts server profile information output from the DBMS116 with biological information. The decryption unit 115 may output decryption failure notification via the transmission unit 112 when the decryption unit 115 fails to decrypt the server profile information 142.

The DBMS 116 retrieves various kinds of information stored in the storage device 14. The DBMS 116 also writes various kinds of information in the storage device 14. For example, the DBMS116 outputs a user ID, encrypted server profile information, and biological information received via the reception unit 113 to the storage device 14.

The storage device 14 stores the user ID, the server profile information and the biological information which are output from the DBMS 116. For example, the storage device 14 stores the encrypted server profile information 142 and the biological information 143 which are associated with a user ID 141 for every user ID as shown in Table 1.

**Table 1**

| Item No. | User ID | Server Profile Information | Biological Information |
|---|---|---|---|
| 1 | 000001 | 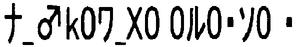 | 11011000111000100 |
| 2 | | | |
| ... | | | |

The storage device 14 is comprised, for example, of a storage medium such as a HDD (Hard Disk Drive) or a flash memory. The storage device 14 may be incorporated in the biological information management apparatus 10.

### <Server>

The server 20 is accessed from the thin client 30, and performs various processing in response to requests of the thin client 30. Such a server 20 is realized by a computer including a memory 21 such as a RAM (Random Access Memory), a CPU 22, a communication interface 23 and a hard disk 24. The server 20 also includes a function for coupling the thin client 30 with the server 20 in VPN (Virtual Private Network). The server 20 may be realized by a blade server (a server comprised of required number of blades, each of which is provided with components necessary for a computer). If the server 20 is to be realized by a blade server, one blade may be assigned to one thin client 30 and on/off control of the blade assigned to the thin client 30 may be performed based on an instruction of the thin client 30.

### <Thin client>

The thin client 30 is a terminal which accesses the server 20. The thin client 30 firstly acquires server profile information from the biological information management apparatus 10 via the network 60, and uses the acquired server profile information to couple with the server 20. The thin client 30 includes a memory 31 such as a RAM or a flash memory, a CPU 32 and a communication interface 33 such as a NIC. The thin client 30 is coupled with the authentication device 40, the biological information obtaining apparatus 50, an input device 70 such as a keyboard or a mouse, and a display 80 such as a liquid crystal monitor via an Input/Output interface (not shown).

The memory 31 of the thin client 30 includes an authentication unit 310, an information registration unit 311, a transmission unit 312, a reception unit 313, a display information processing unit 314, a biological information obtaining unit 315 and a temporary storage unit 316. The information registration unit 311, the transmission unit 312, the reception unit 313, the display information processing unit 314 and The biological information obtaining unit 315 of the memory 31 shown in Fig. 3 are programs functioning as these units which are loaded so that the CPU 32 can execute the programs.

The authentication unit 310 transmits to the biological information management apparatus 10 an authentication request including biological information based on an instruction input from the input device 70.

The information registration unit 311 receives a user ID, biological information management apparatus coupling information, server profile information or the like from the input device 70, and stores them in the temporary storage unit 316. The information registration unit 311 also outputs biological information which is input to the thin client 30 and the received biological information management apparatus coupling information to the authentication device 40.

The transmission unit 312 transmits to the biological information management apparatus 10 or the server 20 various kinds of information such as a user ID, biological information management apparatus coupling information, server profile information and biological information.

The reception unit 313 receives various kinds of information such as server profile information which is sent from the biological information management apparatus 10.

The display information processing unit 314 makes the display 80 to display a registration screen which prompts a user to enter registration information such as a user ID, biological information management apparatus coupling information, server profile information, or an authentication screen which prompts a user to enter a user ID or the like which is required for the authentication process.

The biological information obtaining unit 315 makes the biological information obtaining apparatus 50 to obtain biological information based on an instruction from the input device 70. The biological information obtaining unit 315 then receives the biological information which is obtained by the biological information obtaining apparatus 50.

The temporary storage unit 316 temporarily stores information, such as biological information, biological information management apparatus coupling information, server profile information, which is output from the biological information obtaining apparatus 50, the biological information management apparatus 10 or the authentication device 40 or the like.

### <Authentication Device>

The authentication device 40 stores biological information management apparatus coupling information which is encrypted with biological information. When the authentication device 40 receives biological information via the thin client 30, the authentication device 40 decrypts the biological information management apparatus coupling information with the received biological information and outputs the decrypted biological information management apparatus coupling information.

The authentication device 40 includes a memory 41, a processing unit 42, an input unit 43 and an output unit 44. The memory 41 is comprised of a storage medium such as a flash memory. The memory 41 stores biological information management apparatus coupling information 412 of the thin client 30 (encrypted biological information management apparatus coupling information).

The processing unit 42 retrieves information from the memory 41 or writes (registers) information in the memory 41. The processing unit 42 encrypts or decrypts the input biological information management apparatus coupling information with biological information. The processing unit 42 includes an encryption unit 421 and a decryption unit 422.

The encryption unit 421 encrypts biological information management apparatus coupling information with biological information to generate biological information management apparatus coupling information 412. The encryption unit 421 then stores the generated biological information management apparatus coupling information 412 in the memory 41.

The decryption unit 422 decrypts the biological information management apparatus coupling information 412 which is stored in the memory 41 with biological information. When the decryption unit 422 fails to decrypt the biological information management apparatus coupling information 412, the decryption unit 422 may output a signal indicating the decryption failure to the output unit 44. With this configuration, a user is allowed to be informed of the authentication failure of the biological information.

The processing unit 42 may be realized by a dedicated hardware or a program executed by a CPU (not shown).

The input unit 43 outputs to the processing unit 42 a user ID, biological information management apparatus coupling information or the like which is output from the thin client 30.

The output unit 44 outputs to the thin client 30 biological information management apparatus coupling information which is decrypted by the decryption unit 422.

As described above, since the authentication device 40 stores encrypted biological information management apparatus coupling information, even if the authentication device 40 is stolen, the contents of the biological information management apparatus coupling information will not be leaked.

### <Biological Information Obtaining Apparatus>

The biological information obtaining apparatus 50 obtains user's biological information (his or her fingerprint, iris, vein, voice or the like) and outputs it to the thin client 30. The biological information obtaining apparatus 50 includes a biological information obtaining unit 51 for obtaining biological information based on an instruction from the thin client 30 and a biological information output unit 52 for outputting the obtained biological information to the thin client 30 as image data. The biological information obtaining apparatus 50 may be incorporated in the thin client 30.

### <Processing Procedure>

Next, the information processing procedure of the system is described in detail.

### <Initial Registration Process>

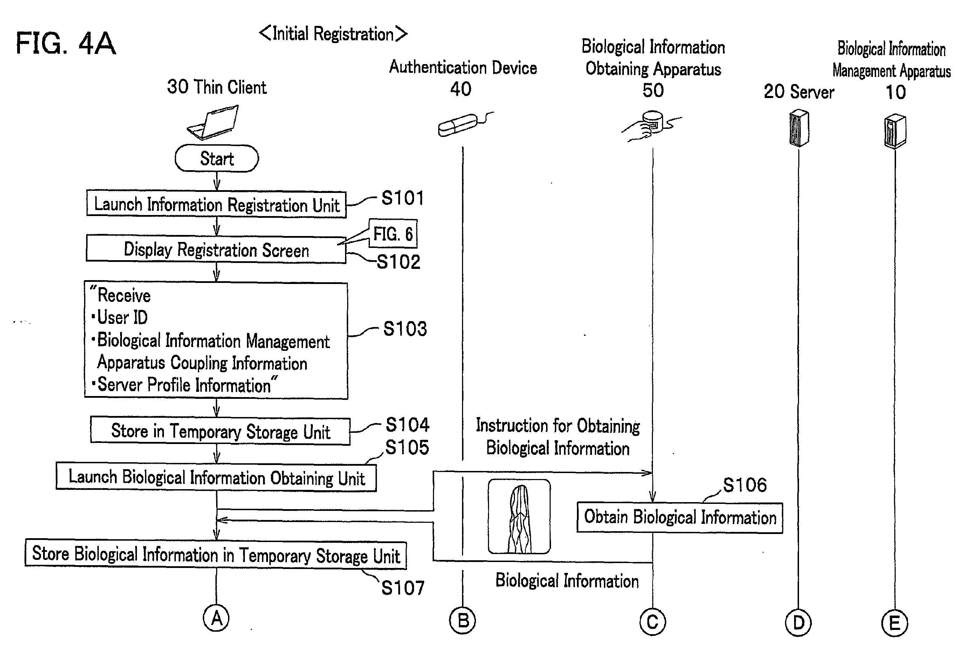

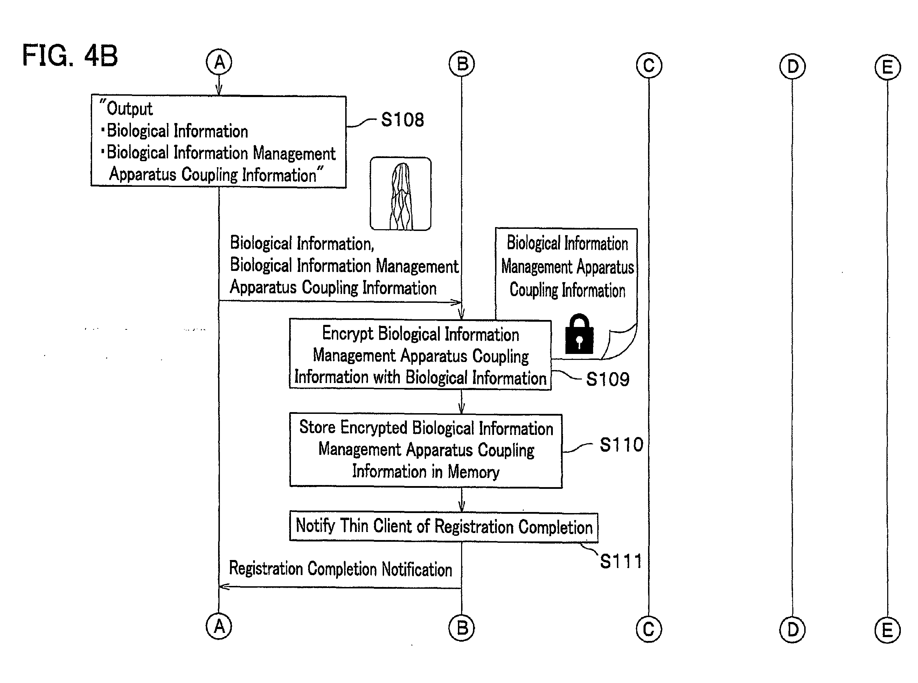

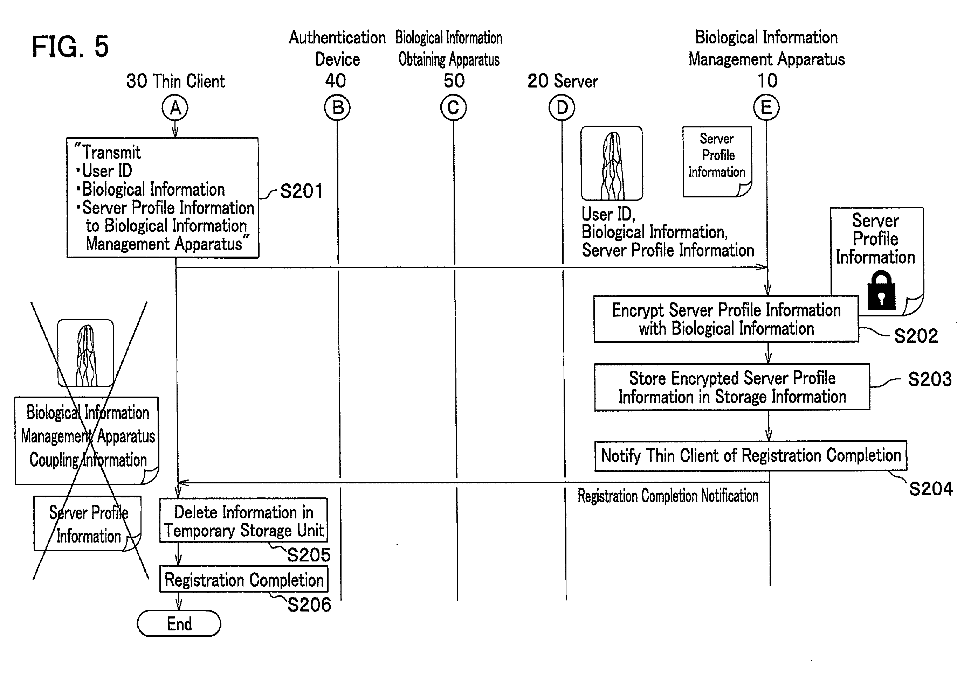

An initial registration process of various kinds of information, such as server profile information and biological information management apparatus coupling information is described with reference to Figs. 3 to 5. Figs. 4 and 5 are flowcharts showing the initial registration process of the system shown in Fig. 3.

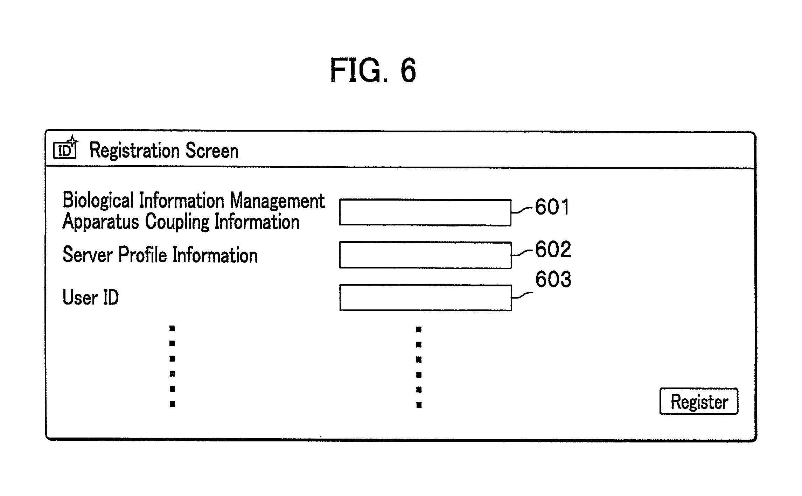

The thin client 30 launches the information registration unit 311 (see Fig. 3) (S101). The information registration unit 311 displays a registration screen by the display information processing unit 314. An example of the registration screen is shown in Fig. 6. The display information processing unit 314 displays, for example, a registration screen including an input box 601 for biological information management apparatus coupling information, an input box 602 for server profile information and an input box 603 for a user ID as shown in Fig. 6.

Returning to the explanation of Figs. 4A and 4B, when the information registration unit 311 of the thin client 30 receives a user ID, biological information management apparatus coupling information and server profile information via the input device 70 (S103), the information registration unit 311 stores the information in the temporary storage unit 316 (S104).

Next, the thin client 30 launches the biological information obtaining unit 315 (S105). When the biological information obtaining unit 315 is launched, the display information processing unit 314 displays a screen which prompts a user to put his or her finger on the biological information obtaining apparatus 50. The biological information obtaining unit 315 of the thin client 30 outputs a biological information obtaining instruction to the biological information obtaining apparatus 50. When the biological information obtaining apparatus 50 receives such an instruction, the biological information obtaining apparatus 50 obtains user's biological information by the biological information obtaining unit 51(S106). Then, the biological information output unit 52 of the biological information obtaining apparatus 50 outputs the obtained biological information to the thin client 30.

The information registration unit 311 of the thin client 30 stores the biological information output from the biological information obtaining apparatus 50 in the temporary storage unit 316 (S107). As described above, the temporary storage unit 316 becomes to store the biological information in addition to the user ID, the biological information management apparatus coupling information and the server profile information which have been input in S104. For example, the biological information "11011000111000100" is stored in the temporary storage unit 316 in addition to the biological information management apparatus coupling information "10.203.10.1" and the server profile information "10.203.20.1 UID, PASS" which are associated with the user ID "000001"as shown in Table 2.

**Table 2**

| Item No. | User ID | Biological Information Management Apparatus Coupling Information | Server Profile Information | Biological Information |
|---|---|---|---|---|
| 1 | 000001 | 10.203.10.1 | 10.203.20. 1. UID.PASS | 11011000111000100 |
| 2 | | | | |
| ... | | | | |

Next, the information registration unit 311 of the thin client 30 retrieves the biological information and the biological information management apparatus coupling information from the temporary storage unit 316, and outputs them to the authentication device 40 (S108).

The authentication device 40 receives the biological information and the biological information management apparatus coupling information from the thin client 30 by the input unit 43. Then, the encryption unit 421 of the authentication device 40 encrypts the received biological information management apparatus coupling information with the received biological information (S109). The encryption unit 421 stores the encrypted biological information management apparatus coupling information (the biological information management apparatus coupling information 412) in the memory 41 (S110).

At this stage, the memory 41 stores the biological information management apparatus coupling information 412 which is generated by encrypting the biological information management apparatus coupling information as shown in Table 3.

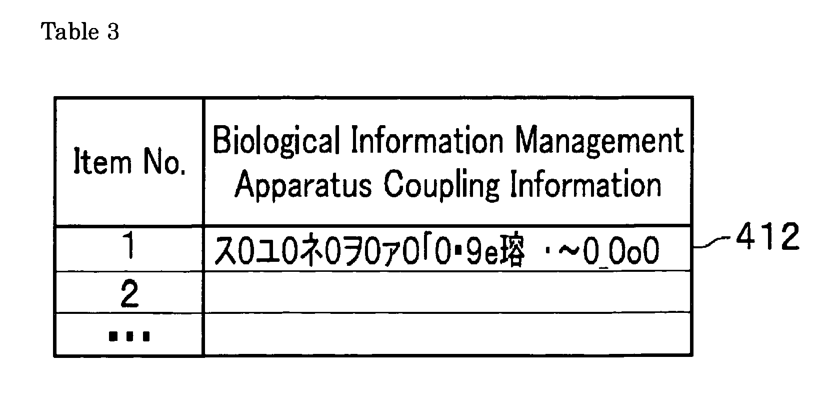

Then, the processing unit 42 of the authentication device 40 outputs a registration completion notification to the thin client 30 via the output unit 44 (S111).

Next, Fig. 5 is explained. When the thin client 30 receives the registration completion notification, the thin client 30 retrieves the user ID, the biological information and the server profile information that are stored in the temporary storage unit 316 and transmits the information to the biological information management apparatus 10 (S201).

The reception unit 113 of the biological information management apparatus 10 receives the user ID, the biological information and the server profile information. The encryption unit 114 of the biological information management apparatus 10 encrypts the server profile information with the biological information (S202). The DBMS 116 associates the encrypted server profile information with the received user ID and biological information, and stores them in the storage device 14 (S203). At this stage, information stored in the storage device 14 includes, for example, the user ID, the encrypted server profile information and the biological information as shown in Table 4.

**Table 4**

| Item No. | User ID | Server Profile Information | Biological Information |
|---|---|---|---|
| 1 | 000001 | 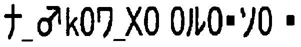 | 11011000111000100 |
| 2 | | | |
| ... | | | |

Then, the transmission unit 112 of the biological information management apparatus 10 transmits a registration completion notification to the thin client 30 (S204).

When the thin client 30 receives the registration completion notification from the biological information management apparatus 10 by the reception unit 313, the thin client 30 deletes the information stored in the temporary storage unit 316 (the user ID, the biological information management apparatus coupling information, the server profile information and the biological information) by the information registration unit 311 (S205). With this configuration, it is possible to prevent the user ID, the biological information management apparatus coupling information, the server profile information and the biological information that have remained in the memory 31 of the thin client 30 from being illegally leaked. Then, the information registration unit 311 completes the registration process (S206) and terminates the processing.

The above described processing makes it possible that the user ID, the biological information management apparatus coupling information, the server profile information and the biological information do not remain in the thin client 30 after the thin client 30 executes the initial registration process. The authentication device 40 stores the encrypted biological information management apparatus coupling information, and the biological information management apparatus 10 stores the encrypted server profile information. Therefore, even if the thin client 30 or the authentication device 40 is stolen or the biological information management apparatus 10 is illegally accessed, the biological information management apparatus coupling information, the server profile information and the biological information will not be leaked to a third party.

### <Authentication Process>

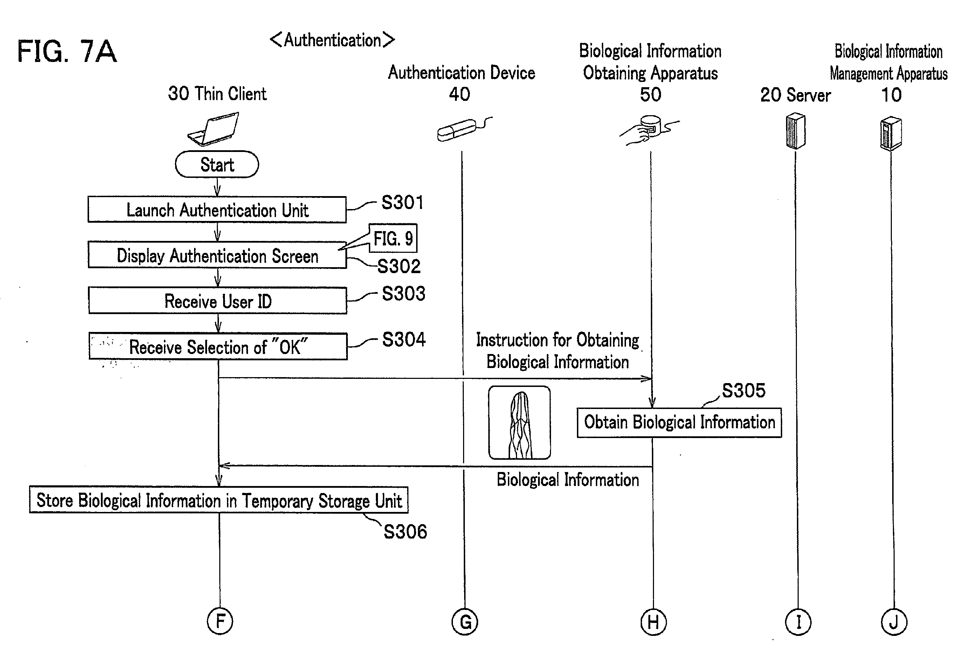

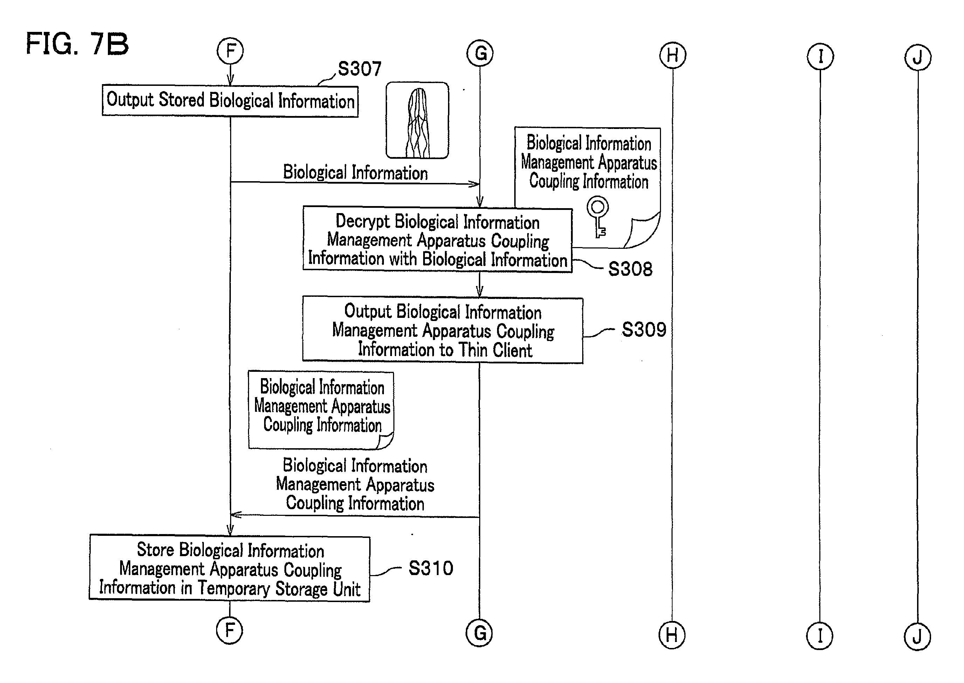

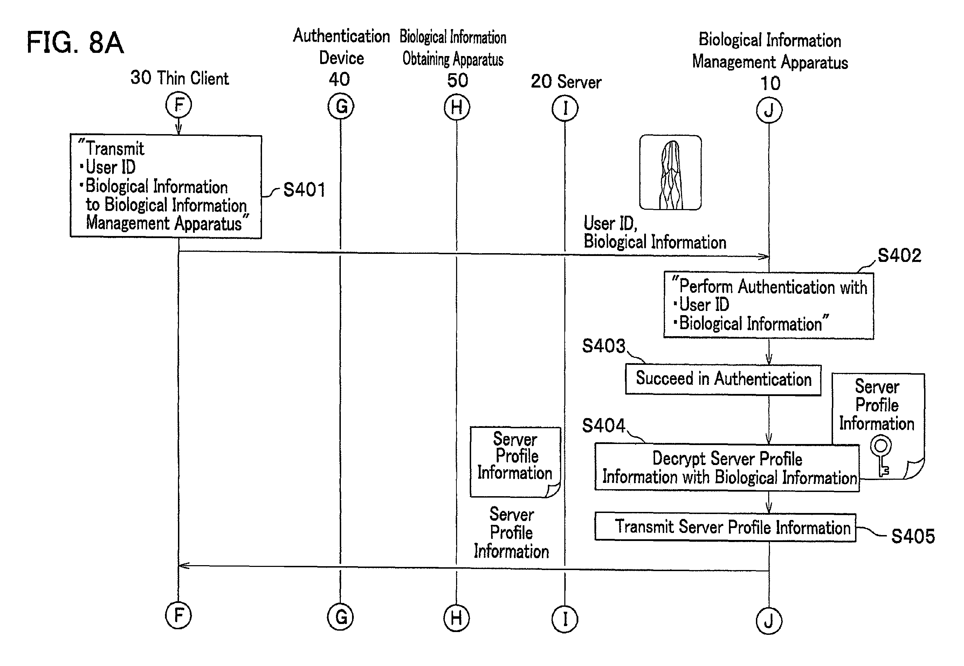

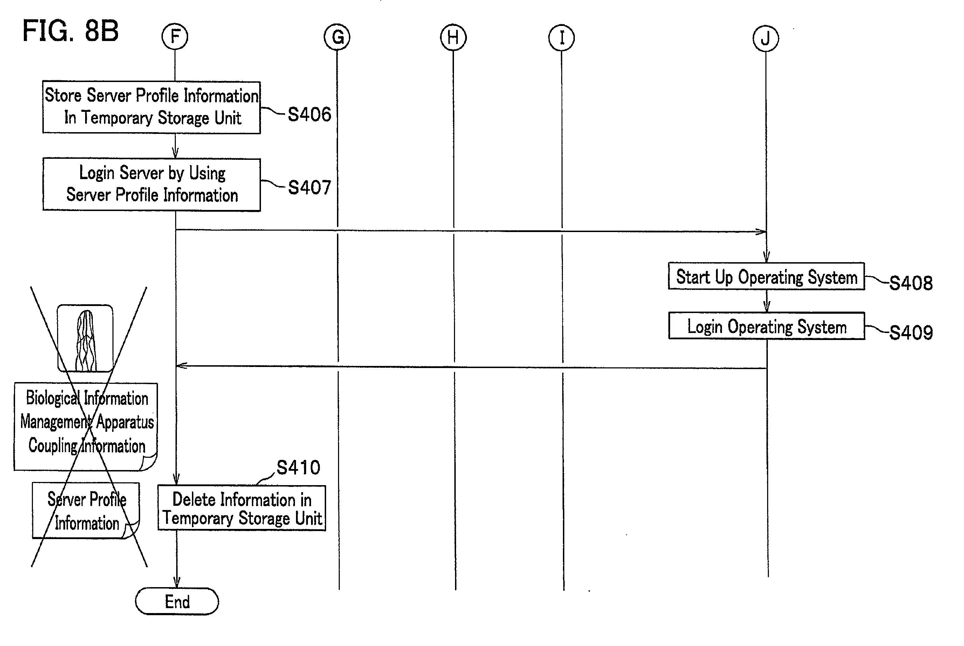

Next, the authentication process of the system is explained with reference to Figs. 7 and 8. Figs. 7 and 8 are flowcharts of the authentication process of the system.

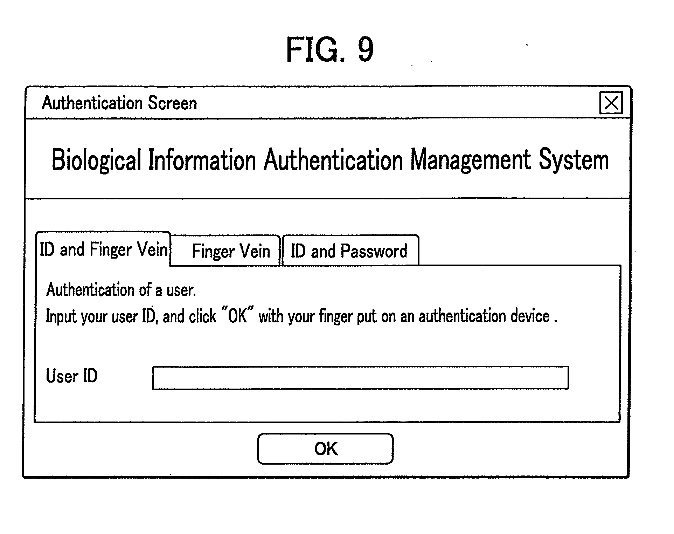

The thin client 30 launches the authentication unit 310 (see Fig. 3) (S301). The display information processing unit 314 displays an authentication screen (S302). An example of the authentication screen which is displayed by the display information processing unit 314 is shown in Fig. 9. As shown in Fig. 9, the display information processing unit 314 displays the authentication screen including an input box for a user ID.

The description returns to Figs. 7A and 7B. The authentication unit 310 of the thin client 30 then receives a user ID through the authentication screen (S303). When the authentication unit 310 receives the selection of "OK" on the authentication screen (S304), the authentication unit 310 stores the user ID in the temporary storage unit 316. The authentication unit 310 then launches the biological information obtaining unit 315, and the biological information obtaining unit 315 outputs to the biological information obtaining apparatus 50 a biological information obtaining instruction. When the biological information obtaining apparatus 50 receives the biological information obtaining instruction, the biological information obtaining apparatus 50 obtains user's biological information by the biological information obtaining unit 51 (S305), and outputs the obtained user's biological information to the thin client 30.

The authentication unit 310 of the thin client 30 associates the biological information which has been output from the biological information obtaining apparatus 50 with the user ID, and stores them in the temporary storage unit 316 (S306). At this stage, the temporary storage unit 316 stores the biological information which is associated with the user ID, but does not store the biological information management apparatus coupling information nor the server profile information as shown in Table 5.

**Table 5**

| Item No. | User ID | Biological Information Management Apparatus Coupling information | Server Profile Information | Biological Information |
|---|---|---|---|---|
| 1 | 000001 | | | 11011000111000100 |
| 2 | | | | |
| ... | | | | |

The authentication unit 310 of the thin client 30 then retrieves the biological information stored in the temporary storage unit 316, and outputs it to the authentication device 40 (S307).

The authentication device 40 receives the biological information by the input unit 43. The decryption unit 422 of the authentication device 40 decrypts the biological information management apparatus coupling information 412 stored in the memory 41 with the received biological information (S308). For example, the decryption unit 422 decrypts the biological information management apparatus coupling information 412 to obtain the biological information management apparatus coupling information "10.203.10.1" as shown in Table 6.

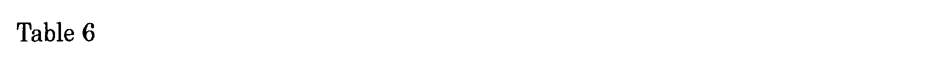

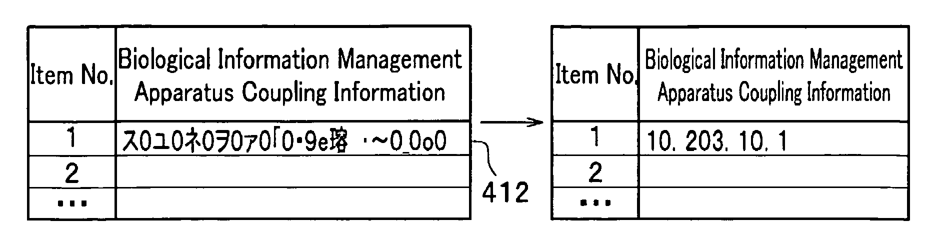

The authentication device 40 outputs the decrypted biological information management apparatus coupling information to the thin client 30 by the output unit 44 (S309).

When the authentication unit 310 of the thin client 30 receives the biological information management apparatus coupling information from the authentication device 40, the authentication unit 310 stores the biological information management apparatus coupling information in the temporary storage unit 316 (S310). Thus, the thin client 30 is allowed to know the IP address of the biological information management apparatus 10. For example, the authentication unit 310 stores in the temporary storage unit 316 "10.203.10.1" as the biological information management apparatus coupling information that is associated with the user ID "000001" as shown in Table 7.

**Table 7**

| Item No. | User ID | Biological Information Management Apparatus Coupling Information | Server Profile Information | Biological Information |
|---|---|---|---|---|
| 1 | 000001 | 10.203.10.1 | | 11011000111000100 |
| 2 | | | | |
| ... | | | | |

Next, Figs. 8A and 8B are explained. The authentication unit 310 of the thin client 30 retrieves the user ID and the biological information that are stored in the temporary storage unit 316. The authentication unit 310 then transmits the information to the biological information management apparatus 10 by the transmission unit 312 (S401). More specifically, the authentication unit 310 transmits an authentication request which includes the user ID and the biological information to the biological information management apparatus 10.

When the biological information management apparatus 10 receives the authentication request including the user ID and the biological information by the reception unit 113, the authentication unit 111 performs an authentication process by using the user ID and the biological information (S402). More specifically, the authentication unit 111 retrieves the biological information 143 associated with the user ID from the storage device 14 by using the received user ID as a key. The authentication unit 111 then determines whether or not the biological information 143 is identical to the biological information which is received from the thin client 30.

If the authentication process is succeeded in the authentication unit 111 of the biological information management apparatus 10 (S403), the authentication unit 111 decrypts the server profile information 142 which is associated with the received user ID with the received biological information (S404). For example, the authentication unit 111 decrypts the server profile information 142 to obtain the server profile information "10.203.20.1, UID, PASS" as shown in Table 8.

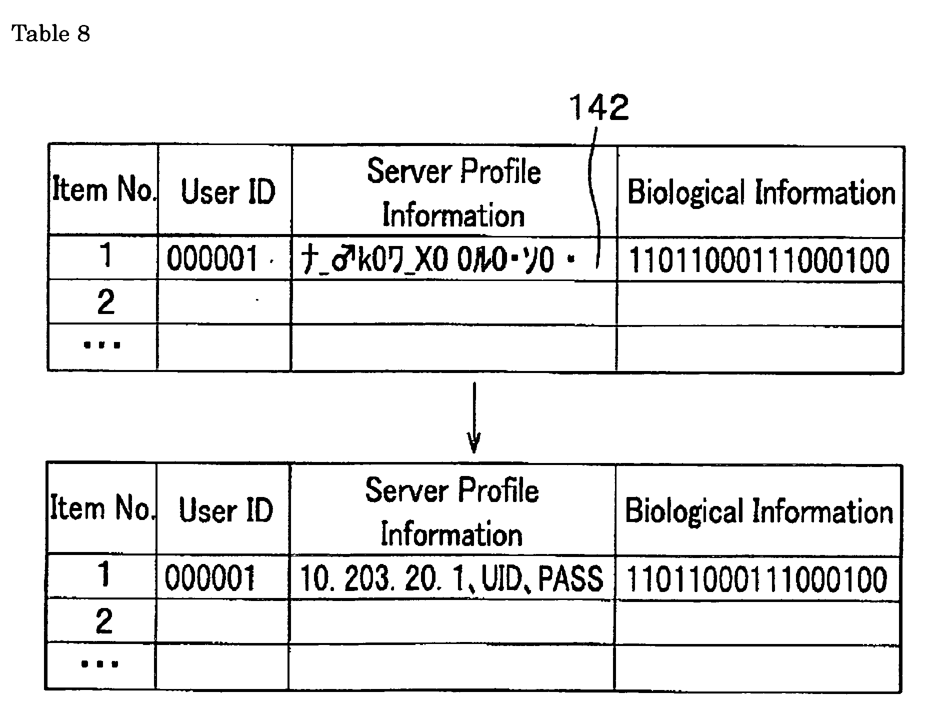

The authentication unit 111 of the biological information management apparatus 10 transmits the decrypted server profile information to the thin client 30 by the transmission unit 112 (S405). As described above, the biological information management apparatus 10 transmits the server profile information to the thin client 30 after the user of the thin client 30 is verified as an authenticated user based on his or her biological information.

When the thin client 30 receives the server profile information by the reception unit 313, the thin client 30 stores the received server profile information in the temporary storage unit 316 (S406). At this stage, information stored in the temporary storage unit 316 includes the biological information management apparatus coupling information, the server profile information and the biological information that are associated with the user ID as shown in Table 9.

**Table 9**

| Item No. | User ID | Biological Information Management Apparatus Coupling Information | Server Profile Information | Biological Information |
|---|---|---|---|---|
| 1 | 000001 | 10.203.10.1 | 10.203.20.1. UID, PASS | 11011000111000100 |
| 2 | | | | |
| ... | | | | |

The thin client 30 logs in the server 20 by using the received server profile information (S407). The server 20 which has received the login of the thin client 30 starts up an OS (Operating System) (S408), and receives the login of the OS (S409).

When the thin client 30 succeeds to login the server 20 as described above, the authentication unit 310 deletes the information (the biological information management apparatus coupling information, the server profile information, the biological information or the like) stored in the temporary storage unit 316 (S410). The above described configuration enables to prevent the biological information management apparatus coupling information, the server profile information, the biological information or the like from being illegally leaked even if a third party uses the thin client 30.

The system of the above described embodiment may not include the biological information management apparatus 10. For example, the authentication device 40 may store encrypted server profile information of the server 20 in stead of encrypted biological information management apparatus coupling information. When the authentication device 40 receives biological information via the thin client 30, the authentication device 40 decrypts the server profile information with the received biological information. The thin client 30 then uses the decrypted server profile information to access the server 20. This configuration also enables to prevent the server profile information form being illegally leaked to a third party. Since the authentication device 40 decrypts the server profile information with user's biological information, it is possible to output the server profile information to the thin client 30 after a user of the thin terminal 30 is verified as an authenticated user with high reliability.

In the system of the above described embodiment, the biological information management apparatus 10 performs the authentication process by using the user ID and the biological information, however, the biological information management apparatus 10 may perform an authentication process by using a user ID and a password if biological information can not be obtained. Furthermore, the biological information management apparatus 10 may perform an authentication process by using only biological information (see Fig. 9 for an example of the authentication screen).

The embodiment according to the present invention has been explained as aforementioned. However, the embodiment of the present invention is not limited to those explanations, and those skilled in the art ascertain the essential characteristics of the present invention and can make the various modifications and variations to the present invention to adapt it to various usages and conditions without departing from the spirit and scope of the claims.

## Claims

1. An authentication device which outputs to a thin client, address information of a server which is an access destination of the thin client, comprising:
an input unit for receiving biological information of a user of the thin client;
a storage unit for storing the address information of the server which is the access destination of the thin client, the address information being encrypted with the biological information of the user;
a decryption unit for decrypting, when the biological information of the user is received via the input unit, the encrypted address information with the received biological information of the user and
an output unit for outputting the decrypted address information to the thin client.

2. The authentication device according to Claim 1, further comprising an encryption unit for encrypting the address information with the received biological information.

3. A biological information management apparatus for authenticating a user of a thin client by using biological information sent from the thin client; comprising:
a reception unit for receiving an authentication request from the thin client, the authentication request including the biological information;
a storage unit for storing biological information of the user of the thin client and profile information for allowing the thin client to use a server, the biological information of the user of the thin client and the profile information being associated with each other;
an authentication unit for determining whether or not the biological information included in the authentication request is identical to the biological information of the user of the thin client which is stored in the storage unit; and
a transmission unit for retrieving the profile information of the thin client from the storage unit and transmitting the profile information to the thin client from which is the authentication request has been transmitted, if the authentication unit determines that the biological information sent from the thin client is identical to the biological information of the user of the thin client which is stored in the storage unit.

4. The biological information management apparatus according to Claim 3, wherein
the profile information is information which is encrypted with the biological information of the user of the thin client;
the biological information management apparatus further comprises a decryption unit for decrypting the encrypted profile information with the biological information sent from the thin client, and
the transmission unit transmits the profile information which has been decrypted by the decryption unit to the thin client, if the authentication unit determines that the biological information sent from the thin client is identical to the biological information of the user of the thin client which is stored in the storage unit.

5. An authentication system for authenticating a user of a thin client coupled to a server, comprising: the authentication device according to Claim 1; and the biological information management apparatus according to Claim 3.

6. An authentication method implemented in an authentication device for authenticating a thin client coupled to a server; the method comprising the steps, performed by the authentication device, of:
receiving biological information;
encrypting address information of a server which is an access destination of the thin client with the received biological information;
storing the encrypted address information in a storage unit of the authentication device;
decrypting, upon receiving the biological information, the encrypted address information with the received biological information; and
transmitting the decrypted address information to the thin client.

7. An authentication method implemented in an authentication system which includes an authentication device for authenticating a thin client coupled to a server and a biological information management apparatus for authenticating the thin client by using biological information, the method comprising the steps, performed by the biological information management apparatus, of:
determining, if the biological information management apparatus receives an authentication request which includes biological information from the thin client, whether or not the biological information included in the authentication request is identical to biological information of a user of the thin client which is stored in a storage unit, and
retrieving profile information for allowing the thin client to use the server which is stored in the storage unit and transmitting the retrieved profile information to the thin client, if the biological information management apparatus determines that the biological information included in the authentication request is identical to the biological information of the user of the thin client which is stored in the storage unit.

8. The authentication method according to Claim 7, wherein the profile information is information which is encrypted with the biological information of the user of the thin client,
the method further comprising the steps, performed by the biological information management apparatus, of:
decrypting, if the biological information management apparatus determines that the biological information sent from the thin client is identical to the biological information of the user of the thin client which is stored in the storage unit, the encrypted profile information with the biological information included in the authentication request; and
transmitting the decrypted profile information to the thin client.
